Europäisches Patentamt

European Patent Office

Office européen des brevets

(19)

(11) Numéro de publication: **0 286 494 B1**

(12) **FASCICULE DE BREVET EUROPEEN**

(45) Date de publication de fascicule du brevet: **28.10.92**　(51) Int. Cl.⁵: **B25B 5/14**, B29C 65/78

(21) Numéro de dépôt: **88400689.1**

(22) Date de dépôt: **22.03.88**

(54) **Appareil pour le positionnement de l'extrémité d'une première pièce allongée, en matière plastique, avec au moins l'extrémité d'une deuxième pièce allongée en matière plastique, en vue de leur assemblage.**

(30) Priorité: **30.03.87 FR 8704414**

(43) Date de publication de la demande:
**12.10.88 Bulletin 88/41**

(45) Mention de la délivrance du brevet:
**28.10.92 Bulletin 92/44**

(84) Etats contractants désignés:
**AT BE CH DE ES GB GR IT LI LU NL SE**

(56) Documents cités:
CH-A- 371 768　　　DE-A- 858 160
FR-A- 2 586 079　　FR-A- 2 587 272
GB-A- 556 962　　　GB-A- 797 021
US-A- 1 870 760　　US-A- 2 817 892
US-A- 3 414 950　　US-A- 3 772 753
US-A- 3 828 413　　US-A- 3 920 232

(73) Titulaire: **GAZ DE FRANCE
23, rue Philibert Delorme
F-75017 Paris(FR)**

Titulaire: **SOCIETE JOSEPH SAURON MATE-
RIEL INDUSTRIEL
14, rue Nollet
F-91200 Athis Mons(FR)**

(72) Inventeur: **Bazinet, Marc
18 Allée du Moulin à Vent
F-77184 Emerainville(FR)**
Inventeur: **Sauron, Jean
44 Bd de Bellevue
FR 91210 Draveil(FR)**

(74) Mandataire: **Berger, Helmut et al
Cabinet Z. WEINSTEIN 20, avenue de Friedland
F-75008 Paris(FR)**

EP 0 286 494 B1

## Description

La présente invention a pour objet un appareil pour le redressement et l'alignement de l'extrémité d'une première pièce allongée, en matière plastique, telle qu'un tube, avec au moins l'extrémité d'une deuxième pièce allongée en matière plastique, telle qu'un tube, en vue de leur assemblage, notamment bout à bout.

US-A-3 828 413 décrit un appareil pour le raccordement de tubes de diamètres importants, comprenant un organe poussoir apte à exercer des efforts radiaux sur la périphérie du tube, qui est monté angulairement déplaçable sur une structure circulaire fixée à un ensemble de maintien et de positionnement du tube, cet ensemble étant lui-même monté déplaçable suivant la direction axiale des tubes, sur un châssis.

Cependant, un tel appareil est particulièrement encombrant et est donc difficile à monter et à manipuler, de sorte qu'il ne peut pas être utilisé pour l'assemblage de tubes de diamètres réduits dans une fouille aux dimensions peu importantes.

Par ailleurs, FR-A-2 587 272 qui appartient aux mêmes demanderesses que la présente invention, décrit un appareil correspondant au préambule de la revendication 1, c'est-à-dire pour le redressement et l'alignement d'une extrémité de de pièce allongée en matière plastique telle qu'un tube, avec au moins une extrémité d'une deuxième pièce correspondante en vue de leur assemblage, du type comprenant un châssis sur lequel sont montés au moins un dispositif de maintien et un dispositif de positionnement apte à exercer sur la périphérie de la pièce un effort radial entraînant sa flexion longitudinale.

Toutefois, cet appareil de faible encombrement ne permet pas de faire fléchir pour les redresser, des tubes de différents diamètres.

Aussi, la présente invention a pour but de proposer un appareil qui soit à la fois compact et apte à redresser dans une fouille par exemple, des tubes de différents diamètres.

A cet effet, l'invention a pour objet un appareil tel que décrit dans la revendication 1.

Selon une autre caractéristique de l'invention, la structure de support précitée est constituée par au moins un arceau, et l'organe poussoir est formé par une tête poussoir dont la surface de contact épouse le profil de la pièce à redresser, cette tête poussoir étant montée amoviblement sur la tige du piston d'un vérin tel qu'un vérin hydraulique, fixé sur un support ayant la forme d'une noix mobile.

Mais d'autres avantages de l'invention ressortiront mieux de la description détaillée, donnée uniquement à titre d'exemple, qui suit et se réfère aux dessins annexés illustrant un mode de réalisation de l'invention, et dans lesquels :

La figure 1 est une vue en perspective d'un appareil selon la présente invention ;

La figure 2 est une vue en coupe transversale selon la ligne II-II de la figure 1 ;

La figure 3 est une vue en coupe brisée selon la ligne III-III de la figure 2 .

La figure 4 est une vue latérale axiale d'un arceau à noix mobile de positionnement de l'extrémité d'un tube, faisant partie de l'appareil selon l'invention représenté à la figure 1, et

La figure 5 est une vue latérale, en coupe partielle de l'arceau selon la figure 4.

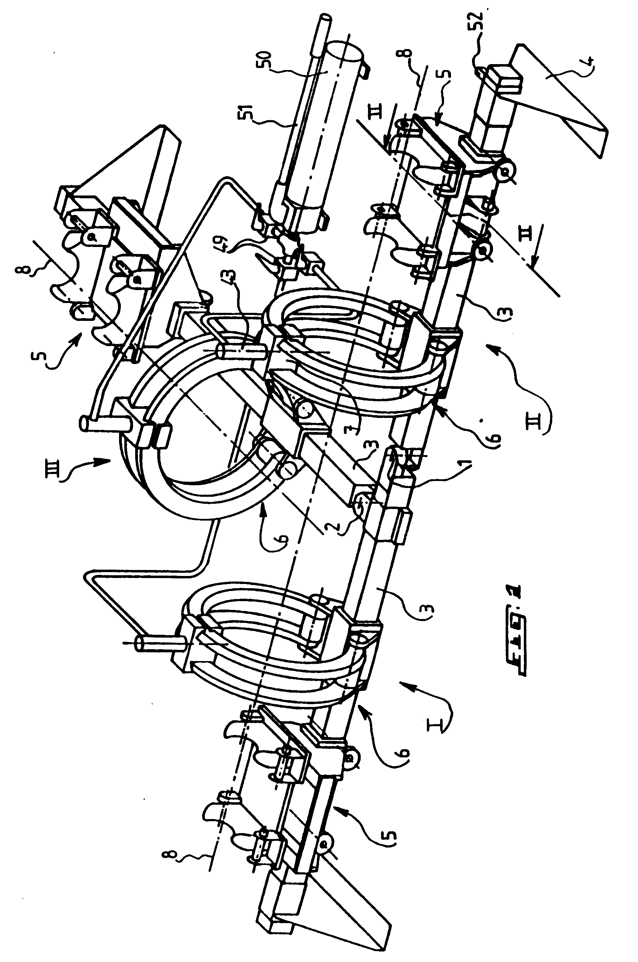

L'appareil selon l'invention qui est représenté à titre d'exemple à la figure 1, est conçu pour permettre de positionner les extrémités de trois tubes en matière plastique par exemple stockés enroulés sur des tourets en vue et au cours des opérations de leur raccordement. A cette fin l'appareil comprend trois parties I, II et III chacune adaptée pour effectuer la préhension, le serrage et l'alignement d'une extrémité de tube et d'en assurer le maintien pendant le cycle de chauffe et de refroidissement des accessoires de jonction tels que des manchons, qui sont connus en soi et ne sont donc pas représentés. Pour permettre l'assemblage ou le raccordement selon des configurations à décalage angulaire souhaité, les trois parties I, II et III sont articulées en 1 et 2.

Chaque partie I, II ou III comprend un châssis comportant essentiellement une poutre 3 en tube d'acier de section carrée, qui repose à son extrémité libre sur un pied 4, un mors-chariot 5 pour le serrage et la translation d'un tube et un arceau 6 à noix mobile 7 pour le positionnement correct de l'extrémité du tube en vue de son alignement par rapport aux extrémités des autres tubes, auxquels cette extrémité doit être raccordée. Les lignes interrompues 8 symbolisent les axes des tubes avec leurs extrémités dans leur position alignée. A cette fin la noix 7 est déplaçable angulairement dans un plan perpendiculaire à l'axe 8 autour de celui-ci, sur la périphérie de l'arceau 6.

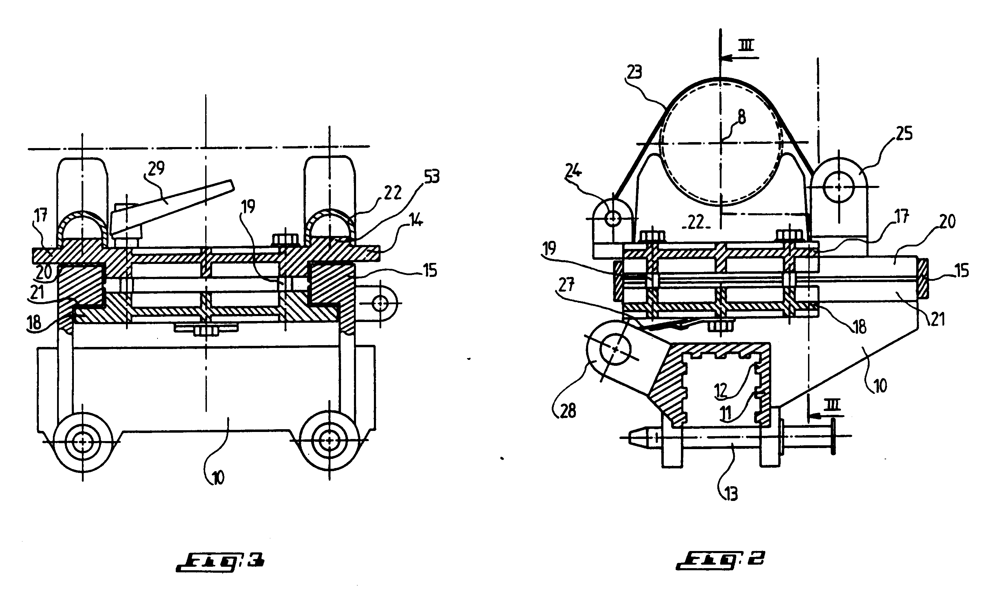

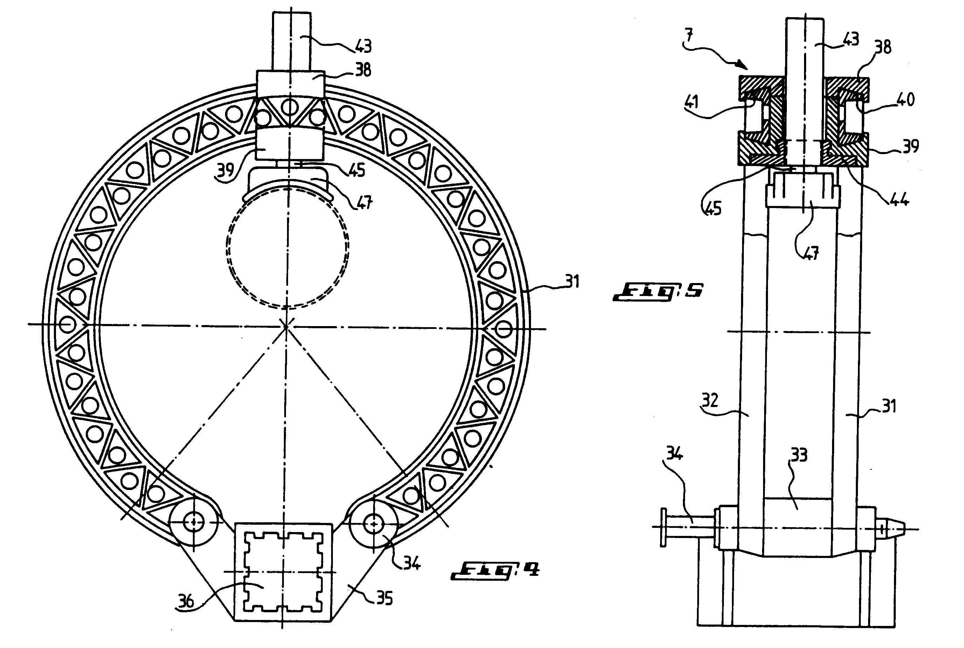

En se référant aux figures 2 et 3, on constate qu'un mors-chariot 5 selon l'invention comporte une partie de support fixe 10 pourvue d'un pied 11 de fixation sur le châssis poutre 3. Ce pied 11 présente une section transversale complémentaire à celle de la poutre et porte avantageusement sur ces surfaces destinées à venir en contact avec la poutre des éléments en saillie 12. La partie support 10 est pourvue de deux dispositifs à goupille de serrage 13 permettant l'immobilisation du mors-chariot 5 sur la poutre 3.

Une partie 14 formant chariot proprement dit est montée coulissante en translation dans une direction perpendiculaire au plan défini par l'axe de la poutre 3 et l'axe du tube 8 aligné, sur des glissières 15 en forme de L prévues à chaque extrémité de la partie du support fixe 10. La partie chariot 14 comporte un plateau supérieur 17 et un contre-plateau inférieur 18, qui sont amoviblement assemblés à l'aide de vis 19, de façon à ce que les branches libres des glissières en forme de L s'engagent entre les deux plateaux.

Les parties support 10 et chariot 14 sont réalisées en un matériau léger, tel qu'en fonte d'alliage léger, par exemple en alliage d'aluminium. Comme il ressort clairement des figures 2 et 3, ces parties sont en plus réalisées, notamment la partie chariot 14, en prévoyant des creux et nervures appropriés pour obtenir un appareil léger et robuste. Des éléments profilés 20, 21 à section transversale en forme de L, par exemple en inox sont interposés respectivement entre le plateau supérieur 17 et la glissière 15, d'une part, et le contre-plateau 18 et la glissière 15 d'autre part, pour assurer un bon coulissement des plateaux ou des glissières.

Le plateau supérieur 17 porte sur sa surface supérieure, au niveau de chaque extrémité un élément 22 présentant un évidement en forme d'un arc de cercle dans le plan perpendiculaire à l'axe de tube 8 et ouvert vers le haut. Les deux éléments 22 constituent ainsi un berceau permettant l'appui d'un tube, comme cela est illustré schématiquement à la figure 2. A chaque élément de berceau 22 est associée une sangle de serrage 23 avantageusement en polyester qui est ancrée de part et d'autre de l'élément 22, sur le plateau de chariot 14, respectivement en 24 et 25, ce dernier point d'ancrage étant pourvu de moyens enrouleurs permettant à la sangle 23 de ramener le tube toujours dans sa position appropriée dans le berceau. Les surfaces de contact avec le tube, des éléments de berceau 22, présentent une forme chanfreinée qui est étudiée pour ne pas blesser le tube, lors de son serrage par des sangles 23. La partie chariot 14 peut être déplacée en translation, sur les glissières 15 de la partie support fixe 10 à l'aide d'un dispositif d'entraînement à effet unidirectionnel, comprenant essentiellement une sangle 27 et des moyens enrouleurs indiqués en 28 qui sont montés sur la partie formant pied 12, l'extrémité libre de la sangle 27 étant fixée sur la surface inférieure du contre-plateau 18 du chariot 14. Les mors-chariot 5 des parties I et II de l'appareil selon l'invention, qui sont montrés à la figure 1 se positionnent, avantageusement, de façon tête-bêche, sur le châssis 3.

Il est encore à noter que le chariot 14 d'un mors-chariot 5 selon l'invention est pourvu d'un moyen de verrouillage du chariot sur les glissières 15 de la partie support fixe 10, à l'aide de moyens avantageusement à actionnement manuel, tel qu'un levier schématiquement indiqué sur la figure 3 en 29.

En se référant aux figures 4 et 5, on constate qu'un arceau de redressement 6 selon l'invention se compose de deux éléments annulaires 31, 32, parallèles l'un à l'autre et disposés à une certaine distance axiale perpendiculairement à l'axe de tube 8. Ces deux éléments 31, 32 sont assemblés en bas par des pièces d'écartement 33 et peuvent être amoviblement fixés par des goupilles 34 sur une partie formant pied 35 qui est montée coulissante sur la poutre de châssis 3. On constate que le pied 34 présente un passage ayant une section transversale de forme rectangulaire complémentaire à celle de la poutre.

Comme le montre la figure 5, la noix mobile 7 se compose d'un élément radialement externe 38 et d'un élément radialement interne 39, qui sont conformés de telle manière qu'après leur assemblage par tout moyen approprié ils forment de part et d'autre de leur plan médian parallèle au plan des éléments annulaires 31, 32 des évidements 40, 41 présentant chacun une forme complémentaire à la section transversale des éléments 31, 32, de façon que la noix 7 puisse se déplacer angulairement autour de l'axe 8, dans la direction circonférentielle de l'arceau 6, tout en étant parfaitement maintenue et guidée. Les cavités 40 et 41 vont en s'élargissant de la face axialement externe des éléments 38, 39 vers l'intérieur et les éléments annulaires 31, 32 présentent sur leurs surfaces radialement externe et interne des chanfreins de forme complémentaire aux cavités, de façon que les efforts s'exerçant sur l'arceau se concentrent sur la noix mobile 7, ce qui rigidifie l'ensemble.

La noix mobile 7 porte un vérin hydraulique 43 ou de tout autre nature appropriée, par l'intermédiaire d'une pièce de fixation 44. Le vérin s'étend radialement à travers la noix mobile 7, entre les éléments annulaires 31, 32. En 45 on a représenté la tige du piston du vérin, qui s'étend radialement vers l'axe de tube 8 et porte à son extrémité libre une tête poussoir 47 qui est adaptée pour venir en contact avec la surface latérale de l'extrémité de tube à positionner, comme cela ressort de la figure 4 sur laquelle est indiquée schématiquement en ligne interrompue une extrémité de tube devant être positionnée dans l'axe 8. La surface de la tête poussoir 47 destinée à venir en contact avec le tube présente une courbure appropriée. Comme le montre la figure 1, les vérins des différents arceaux à noix mobile sont reliés chacun par l'intermédiaire d'un élément de vanne 49 à un dispositif de commande en fluide sous pression 50, qui est avantageusement manuellement actionnable, par exemple à l'aide d'un levier 51. L'actionnement de ce dernier occasionne le déplacement en direction radiale de la tête poussoir 47 de la noix mobile 7.

Pour compléter la description de l'appareil selon l'invention, il est encore à indiquer que les pieds supports 4 des poutres de châssis 3 présentent des évidements de logement 52 de la poutre 3, qui s'ouvrent latéralement, ce qui permet de dégager le pied 4 de la poutre par un simple mouvement latéral sans être obligé d'agir sur la poutre 3.

Il est encore à ajouter, que le châssis peut être pourvu dans sa partie au niveau de la zone de raccordement des tubes d'un repérage facilitant la coupe du tube.

Concernant le fonctionnement de l'appareil qui vient d'être décrit, et le façon de le manier, les brèves remarques suivantes paraissent suffisantes. On suppose que deux tubes doivent être raccordés bout à bout dans une fouille. L'appareil selon l'invention, grâce à la structure de base modulaire peut être facilement monté au fond de la fouille. Il suffit d'utiliser les parties I et II représentées à la figure 1. Chacun des tubes à raccorder est fixé sur le mors-chariot 5 d'une partie, à l'aide des éléments de berceau 22 et la sangle de serrage 23. Les éléments de berceau 22 sont amovibles et se fixent facilement à force par exemple sur la protubérance 53 du plateau supérieur 17 du chariot 14. Par un déplacement approprié, facilité par la faculté du déplacement tête-bêche des chariots 14, les extrémités des tubes peuvent être amenées dans une position appropriée. Après avoir coupé les tubes, et après, le cas échéant, la mise en place d'un manchon de raccordement approprié, on commence l'opération du positionnement des extrémités des tubes. A cette fin on place la noix mobile 7 de l'arceau 6 entourant l'extrémité à positionner dans la position angulaire convenable. Ensuite en envoie du fluide sous pression dans le vérin 43, par l'actionnement du levier 51 de la source de fluide sous pression 50, pour que la tête poussoir 47 du vérin puisse exercer une pression latérale sur l'extrémité de tube, poussant celle-ci dans sa position souhaitée par exemple dans l'axe 8. Ces opérations sont effectuées pour chacun des tubes qui sont alors positionnés correctement et maintenus dans cette position pour l'opération de raccordement. Il est évident que l'appareil selon l'invention grâce à l'articulation 1 entre les deux parties I et II permet un décalage des deux tubes selon un angle voulu. Pour un assemblage de trois tubes, on ajoutera la partie III aux parties I et II. Il suffit alors de positionner le troisième tube de façon appropriée par rapport aux deux premiers, de la manière qui vient d'être énoncée.

L'appareil selon l'invention présente un grand nombre d'avantages. L'utilisation de fontes d'alliages légers pour la réalisation des différents modules de l'appareil, l'étude des formes, épaisseurs et nervures permettent d'obtenir un appareil léger, robuste et inaltérable. L'utilisation de sangles de serrage 23, en polyester, pour le serrage et les opérations de translation permet de réduire le nombre de pièces mécaniques en mouvement. La conception modulaire de l'appareil et son faible poids facilitent sa mise en place et son démontage en fouille. Son retrait s'effectue sans avoir à bouger le tube. Les mors-chariots 5 se positionnent tête-bêche sur la poutre 3. Celle-ci une fois en fond de fouille, une translation symétrique par rapport à l'axe du tube à assembler est possible ce qui autorise un plus grand dégagement et un empâtement moindre qu'avec les appareils connus. La fixation des mors-chariots n'empêche pas leur translation dans l'axe du tube avant ou après la coupe. Ceci permet de ramener les tubes bout à bout avec un minimum d'efforts. La bonne position ainsi trouvée, le verrouillage sur la poutre s'effectue facilement à l'aide des goupilles 13. Etant donné que chaque mors-chariot possède deux points d'appui constitués par les éléments de berceau 22, le positionnement du tube est facile à effectuer. L'arceau de redressement à noix mobile permet d'effectuer l'opération de redressement avec une latitude d'environ 300° autour de l'arceau. Enfin l'outillage pour le maniement de l'appareil est réduit : une seule clé pourrait être suffisante. L'appareil selon l'invention permet le positionnement de tubes de diamètres très différents, par exemple de 160, 125, 110 et 90 mm en changeant seulement les éléments de berceau 22.

## Revendications

1. Appareil pour le redressement et l'alignement d'une extrémité de pièce allongée en matière plastique telle qu'un tube, avec au moins une extrémité d'une deuxième pièce correspondante en vue de leur assemblage, du type comprenant un châssis (3) sur lequel sont montés au moins un dispositif de maintien (5) et un dispositif de positionnement (6), ce dernier comportant un organe poussoir apte à exercer sur la périphérie de la pièce un effort radial entraînant sa flexion longitudinale, le dispositif de maintien (5) étant monté de façon à être déplaçable en translation suivant l'axe ou direction longitudinale (8) du châssis (3) par rapport au dispositif de positionnement (6) correspondant, et comportant des moyens réglables (23), permettant le serrage de pièces de profils différents, ledit organe poussoir (7), qui est monté angulairement déplaçable sur une structure de support sensiblement circulaire (31, 32), ayant un débattement radial de sa surface de contact avec la pièce d'au moins sept seizièmes de la distance entre l'axe central de la structure et la surface de contact, dans sa position la plus éloignée par rapport audit axe central.

**2.** Appareil selon la revendication 1, caractérisé en ce que la structure de support précitée est constituée par au moins un arceau (6) et l'organe poussoir (47) est formé par une tête poussoir dont la surface de contact épouse le profil de la pièce à redresser, cette tête poussoir étant montée amoviblement sur la tige (45) du piston d'un vérin (43) tel qu'un vérin hydraulique, fixé sur un support (7) ayant la forme d'une noix mobile.

**3.** Appareil selon l'une des revendications 1 ou 2, caractérisé en ce qu'un dispositif de maintien (5) comprend une pièce support (10) montée fixe sur le support (3) et un chariot (14) monté à coulissement sur la pièce support (10), ce chariot (14) comportant des moyens (22) formant un berceau de logement de ladite pièce qui coopèrent avec lesdits moyens de serrage (23) pour maintenir celle-ci dans le berceau.

**4.** Appareil selon la revendication 3, caractérisé en ce que les moyens de serrage (23) sont formés par une sangle de serrage, avantageusement en polyester, ancrée des deux côtés du berceau pour entourer de façon ajustable la partie circonférentielle libre de la pièce allongée, radialement en regard du berceau (22).

**5.** Appareil selon l'une des revendications précédentes, caractérisé en ce que le châssis est formé par une poutre (3) et est supporté par des pieds (4), cette poutre ayant avantageusement une section transversale carrée, et les dispositifs de maintien (5) et de positionnement (6) étant verrouillables par des moyens appropriés tels qu'une liaison à goupille (13).

**6.** Appareil selon la revendication 5, caractérisé en ce que chaque pied (4) de support de la poutre-châssis (3) comporte un évidement (52) pour le logement de la poutre (3), qui est latéralement ouvert de façon à permettre un dégagement du pied (4) de la poutre (3) par un mouvement latéral du pied par rapport à la poutre.

**7.** Appareil selon l'une des revendications 2 à 6, caractérisé en ce que la structure de support comporte deux éléments annulaires (31, 32) ou arceaux, qui sont assemblés de façon à s'étendre parallèlement l'un à l'autre en ménageant entre eux un espace annulaire permettant le déplacement autour de l'axe (8) précité de l'organe poussoir (47), l'ensemble des deux éléments annulaires (31, 32) étant monté de façon amovible sur une partie formant pied (35) de fixation sur le châssis (3), avantageusement à l'aide d'une liaison par goupille (34).

**8.** Appareil selon la revendication 7, caractérisé en ce que l'organe poussoir (47) est déplaçable autour de l'axe précité (8) suivant un angle d'environ 300°.

**9.** Appareil selon l'une des revendications 2 à 8, caractérisé en ce que le mors-chariot (14) d'un dispositif de maintien (5) est susceptible d'être entraîné en translation par rapport à la poutrechâssis (3) suivant une direction donnée, au moyen d'un organe d'entraînement tel qu'une sangle (27).

**10.** Appareil selon l'une des revendications 3 à 9, caractérisé en ce que les chariots (14) de deux dispositifs de maintien (5) associés aux deux pièces sont susceptibles d'être montés déplaçables de façon tête-bêche sur le châssis (3).

**11.** Appareil selon l'une des revendications précédentes, caractérisé en ce que les dispositifs de maintien (5) et de positionnement (6) sont réalisés en alliage léger et présentent une structure ajourée rigidifiée par des nervures de renforcement appropriées.

**12.** Appareil selon l'une des revendications 5 à 11, caractérisé en ce que la poutre (3) formant châssis comprend au moins deux tronçons de poutre articulés l'un à l'autre de façon à permettre le raccordement d'au moins deux pièces allongées suivant une configuration coudée.

**13.** Appareil selon l'une des revendications précédentes, caractérisé en ce que le châssis est formé par une configuration de trois tronçons de poutre (3) articulés pour permettre le rassemblement de trois pièces allongées.

**14.** Appareil selon l'une des revendications 3 à 13, caractérisé en ce que les éléments de berceau (22) sont montés de façon amovible sur le dispositif de maintien (5).

**Claims**

**1.** Apparatus for the straightening out and the alignment of one end of an elongated part of plastics material such as a tube with at least one end of a second corresponding part with a view to their assembling, of the type comprising a frame (3) on which are mounted at least one holding device (5) and one positioning device (6), the latter comprising a push member adapted to exert upon the periphery of the part a radial force resulting in its longitudinal flexure, the holding device (5) being mounted so as to be displaceable in translatory motion along the axis or longitudinal direction (8) of the frame (3) with respect to the corresponding positioning device (6) and comprising adjustable means (23) allowing the clamping of parts with different profiles, the said push member (7) which is angularly displaceable on a substantially circular support structure (31, 32) having a radial movability of its surface of contact with the part of at least seven sixteenths of the distance between the central axis of the structure and the contact surface in its remotest position with respect to the said central axis.

2. Apparatus according to claim 1, characterized in that the aforesaid support structure is constituted by at least one arch (6) and the pushing member (47) is formed of a pusher head the contact surface of which conforms to the profile of the part to be straightened out, this pusher head being removably mounted on the rod (45) of the piston of a jack (43) such as a hydraulic jack fastened to a support (7) having the shape of a movable bracket.

3. Apparatus according to one of claims 1 or 2, characterized in that a holding device (5) comprises a support part (10) fixedly mounted on the support (3) and a carriage (14) slidably mounted on the support part (10), this carriage (14) comprising means (22) forming a cradle for housing the said part which co-operate with the said clamping means (23) for holding the latter in the cradle.

4. Apparatus according to claim 3, characterized in that the clamping means (23) are formed of a clamping strap advantageously of polyester anchored on both sides of the cradle to surround in an adjustable manner the free circumferential portion of the elongated part radially confronting the cradle (22).

5. Apparatus according to one of the foregoing claims, characterized in that the frame is formed of a beam (3) and is supported by feet (4), this beam advantageously having a square cross-section and the holding and positioning devices (5) and (6) being lockable by suitable means such as a stud connection (13).

6. Apparatus according to claim 5, characterized in that each foot (4) supporting the beam-frame (3) comprises a recess (52) for the accommodation of the beam (3), which is laterally open so as to allow a disengagement of the foot (4) from the beam (3) by a lateral movement of the foot with respect to the beam.

7. Apparatus according to one of claims 2 to 6, characterized in that the support structure comprises two annular elements (31, 32) or arches which are assembled so as to extend in parallel relation to each other while forming there between an annular space allowing the displacement about the aforesaid axis (8) of the pusher member (47), both of these annular elements (31, 32) being mounted in a removable fashion on a portion (35) forming a foot for fastening the frame (3) advantageously with the assistance of a connection through a bolt (34).

8. Apparatus according to claim 7, characterized in that the pusher member (47) is displaceable around the aforesaid axis (8) over an angle of about 300°.

9. Apparatus according to one of claims 2 to 8, characterized in that the jaw-carriage (14) of a holding device (5) is susceptible of being driven in translatory motion with respect to the beam-frame (3) in a given direction by means of a drive member such as a strap (27).

10. Apparatus according to one of claims 3 to 9, characterized in that the carriages (14) of both holding devices (5) associated with two parts are susceptible of being displaceably mounted in head-to-foot relationship on the frame (3).

11. Apparatus according to one of the preceding claims, characterized in that the holding and positioning devices (5) and (6) are made from a light alloy and exhibit an openwork structure stiffened by suitable reinforcing ribs.

12. Apparatus according to one of claims 5 to 11, characterized in that the frame-forming beam (3) comprises at least two beam sections pivotally connected to each other so as to allow the connection of at least two elongated parts according to a bent configuration.

13. Apparatus according to one of the foregoing claims, characterized in that the frame is formed of a configuration of three beam sections (3) pivoted to allow the gathering of three elongated parts.

14. Apparatus according to one of claims 3 to 13, characterized in that the cradle elements (22) are mounted in a removable fashion on the holding device (5).

**Patentansprüche**

1. Gerät zum Geraderichten und zur fluchtenden Ausrichtung eines Endes eines langgestreckten Werkstücks aus Kunststoff wie eines Rohres mit wenigstens einem Ende eines entsprechenden zweiten Werkstücks zum Zweck deren Zusammenfügung, derjenigen Gattung, welches einen Rahmen (3) an welchem wenigstens eine Haltevorrichtung (5) und eine Positioniervorrichtung (6) angeordnet sind, wobei die letztere ein Stösselglied, das fähig ist, auf den Umfang des Werkstücks eine seine Längsbiegung veranlassende Radialkraft auszuüben, aufweist, wobei die Haltevorrichtung derart angeordnet ist, dass sie in Translationsbewegung entlang der Achse bzw. der Längsrichtung (8) des Rahmens (3) in Bezug auf die entsprechende Positioniervorrichtung (6) verschiebbar ist und einstellbare Mittel (23) aufweist, die das Einspannen von Werkstücken mit verschiedenen Profilen gestattet, wobei das besagte Stösselglied (7), das an einem im wesentlichen kreisförmigen Halterungsgefüge (31, 32) winkelmässig verschiebbar angeordnet ist, eine radiale Auslenkbarkeit seiner Berührungsfläche mit dem Werkstück von wenigstens sieben Sechzehntel des Abstandes zwischen der Mittelachse des Gefüges und der Berührungsfläche in seiner in Bezug auf die besagte Mittelachse am weitesten entfernten Stellung hat.

2. Gerät nach Anspruch 1, dadurch gekennzeichnet, dass das vorgenannte Halterungsgefüge durch wenigstens einen Spriegel (6) gebildet ist, und das Stösselglied (47) aus einem Schiebekopf besteht, dessen Berührungsfläche sich an das Profil des geradzurichtenden Werkstücks anpasst, wobei dieser Schiebekopf an der Stange (45) des Kolbens eines an einem die Gestalt eines beweglichen Ansatzstückes aufweisenden Träger (7) befestigten Kraftzylinders (43) wie eines hydraulischen Kraftzylinders abnehmbar angeordnet ist.

3. Gerät nach einem der Ansprüche 1 oder 2, dadurch gekennzeichnet, dass eine Haltevorrichtung (5) ein ortsfest an dem Träger (3) angeordnetes Halterungsstück (10) und einen gleitbar an dem Halterungsstück (10) angeordneten Schlitten (14) aufweist, wobei dieser Schlitten (14) Mittel (22) aufweist, die einen Sattel zur Aufnahme des besagten Stückes bilden, welche mit den besagten Spannmitteln (23) zusammenwirken, um dasselbe in dem Sattel zu halten.

4. Gerät nach Anspruch 3, dadurch gekennzeichnet, dass die Spannmittel (23) durch einen Spanngurt vorteilhaft aus Polyester gebildet werden, der an beiden Seiten des Sattels verankert ist, um den freien Umfangsteil des langgestreckten Werkstücks einstellbar radial gegenüber dem Sattel (22) zu umgeben.

5. Gerät nach einem der vorangehenden Ansprüche, dadurch gekennzeichnet, dass der Rahmen durch einen Balken (3) gebildet wird, und durch Füsse (4) getragen wird, wobei der Balken vorteilhaft einen quadratischen Querschnitt hat und die Halte-und Positioniervorrichtungen (5) und (6) durch geeignete Mittel wie eine Stiftverbindung (13) verriegelbar sind.

6. Gerät nach Anspruch 5, dadurch gekennzeichnet, dass jeder Fuss (4) zum Tragen des Balken-Rahmens (3) eine Aussparung (52) zur Aufnahme des Balkens (3) aufweist, welche seitlich offen ist, um das Freisetzen des Fusses (4) von dem Balken (3) durch eine Seitenbewegung des Fusses in Bezug auf den Balken zu gestatten.

7. Gerät nach einem der Ansprüche 2 bis 6, dadurch gekennzeichnet, dass das Halterungsgefüge zwei ringförmige Elemente (31, 32) oder Spriegel aufweist, die derart zusammengefügt sind, das sie sich parallel zueinander erstrecken unter Bildung zwischen ihnen eines die Verschiebung des Stösselgliedes (47) um die vorgenannte Achse (8) herum gestattenden Ringraumes, wobei die beiden ringförmigen Elemente (31,32) zusammen in lösbarer Weise an einem, einen Fuss zur Befestigung an dem Rahmen (5) vorzugsweise mit Hilfe einer Stiftverbindung (34) bildenden Teil (35) angeordnet sind.

8. Gerät nach Anspruch 7, dadurch gekennzeichnet, dass das Stösselglied (47) um die vorgenannte Achse (8) herum entsprechend einem Winkel von ungefähr 300° bewegbar ist.

9. Gerät nach einem der Ansprüche 2 bis 8, dadurch gekennzeichnet, dass der Backen-Rahmen (14) einer Haltevorrichtung (5) fähig ist, in Translationsbewegung in Bezug auf den Balken-Rahmen (3) in einer gegebenen Richtung mittels eines Antriebmittels wie eines Gurtes (27) angetrieben zu werden.

10. Gerät nach einem der Ansprüche 3 bis 9, dadurch gekennzeichnet, dass die Schlitten (14) von zwei den beiden Werkstücken zugeordneten Haltevorrichtungen (5) fähig sind, in Kopf bei Fuss verschiebbarer Weise an dem Rahmen (3) angeordnet zu werden.

11. Gerät nach einem der vorangehenden Ansprüche, dadurch gekennzeichnet, dass die Halte- und Positioniervorrichtungen (5) und (6) aus Leichtmetall-Legierung hergestellt sind und ein durch geeignete Verstärkungsrippen versteiftes durchbrochenes Gefüge aufweisen.

12. Gerät nach einem der Ansprüche 5 bis 11, dadurch gekennzeichnet, dass der den Rahmen bildende Balken (3) wenigstens zwei Bal-kenabschnitte aufweist, die aneinander ange-lenkt sind, um die Verbindung von wenigstens zwei langgestreckten Werkstücken gemäss einem gekröpften Gebilde zu gestatten.

13. Gerät nach einem der vorangehenden Ansprüche, dadurch gekennzeichnet, dass der Rahmen durch ein Gebilde aus drei angelenkten Balkenabschnitten (3) gebildet wird, um das Zusammensetzen von drei langgestreckten Werkstücken zu gestatten.

14. Gerät nach einem der Ansprüche 3 bis 13, dadurch gekennzeichnet, dass die Sattelelemente (22) in abnehmbarer Weise an der Hal-tevorrichtung (5) angeordnet sind.

Fig. 1

Fig.2

Fig.3

Fig.5

Fig.4